# EUROPEAN PATENT APPLICATION

(11) **EP 3 916 700 A1**
(43) Date of publication of application: **01.12.2021**
(21) Application number: 19911571.8
(22) Date of filing: 18.11.2019
(51) Int. Cl.: G09C 1/00, H04L 9/32, G06F 21/64

(54) **INFORMATION PROCESSING DEVICE, INFORMATION PROCESSING METHOD, AND INFORMATION PROCESSING PROGRAM**

(30) Priority: 23.01.2019 JP 2019008995
(71) Applicant: Sony Group Corporation, Tokyo 108-0075 (JP)
(72) Inventor: TANAKA, Yu, Tokyo 108-0075 (JP)
(74) Representative: MFG Patentanwälte Meyer-Wildhagen Meggle-Freund Gerhard PartG mbB
(86) International application number: PCT/JP2019/045021
(87) International publication number: WO 2020/152956

(57) **Abstract**

An information processing device includes a random number generation unit that generates a time series which defines an acquiring timing, a data acquiring unit that acquires data at a timing defined by the time series generated by the random number generation unit, a hashing unit that hashes the time series generated by the random number generation unit, and a sending unit that sends the data acquired by the data acquiring unit and the time series that has been hashed.

## Description

### [Technical Field]

The present disclosure relates to an information processing device, an information processing method, and an information processing program.

### [Background Art]

At present, data is sent and received between various types of devices using communication lines. It is preferable to report anomalies that occur in the various types of devices as soon as possible in order to use the devices properly. PTL 1 discloses an anomaly reporting device that can detect an anomaly in a device, analyze the anomaly, and report the anomaly of the device to an appropriate destination.

### [Citation List]

### [Patent Literature]

[PTL 1] JP 9-23839 A

### [Summary]

### [Technical Problem]

At present, as communication environments using the Internet are being established, the sending and receiving of data among various types of devices is increasing, and because undesirable situations such as data tampering and data destruction may occur on the Internet, it is desirable that data with a high degree of authenticity be received.

An object of the present disclosure is to provide an information processing device, an information processing method, and an information processing program for sending and receiving reliable data.

### [Solution to Problem]

An information processing device according to the present disclosure includes, for example: a random number generation unit that generates a time series which defines an acquiring timing;
a data acquiring unit that acquires data at a timing defined by the time series generated by the random number generation unit;
a hashing unit that hashes the time series generated by the random number generation unit; and
a sending unit that sends the data acquired by the data acquiring unit and the time series that has been hashed.

For example, the information processing device according to the present disclosure includes:
a receiving unit that receives data sent from a data collection device and hashed information obtained by hashing a time series that defines a data collection timing;
a verification random number generation unit that generates a verification time series that is identical to the time series generated by the data collection device;
a verification hashing unit that hashes the verification time series generated by the verification random number generation unit; and
a confirmation unit that confirms the received data by comparing the received hashed information with the hashed verification time series.

For example, in the information processing device according to the present disclosure, the data acquired by the data acquiring unit includes data measured by a sensor.

For example, in the information processing device according to the present disclosure,
the data acquired by the data acquiring unit includes data that controls a control target unit.

For example, in the information processing device according to the present disclosure,
the data acquired by the data acquiring unit includes data measured by a sensor and data that controls a control target unit, and
the control target unit controls a system measured by the sensor.

For example, in the information processing device according to the present disclosure,
the sending unit sends the data acquired by the data acquiring unit and the time series that has been hashed to a management ledger.

For example, in the information processing device according to the present disclosure, the management ledger is a blockchain.

For example, the information processing device according to the present disclosure includes a learning unit that creates a model using data confirmed by the confirmation unit.

For example, in the information processing device according to the present disclosure,
the confirmation unit confirms the received data using the model created by the learning unit.

An information processing method performed by an information processing device according to the present disclosure includes, for example:
random number generation processing that generates a time series which defines an acquiring timing;
data acquiring processing that acquires data at a timing defined by the time series generated in the random number generation processing;
hashing processing that hashes the time series generated in the random number generation processing; and
sending processing that sends the data acquired in the data acquiring processing and the time series that has been hashed.

An information processing method performed by an information processing device according to the present disclosure includes, for example:
data collection processing, and data confirmation processing capable of communicating with the data collection processing, wherein
the data collection processing includes:
   random number generation processing that generates a time series which defines an acquiring timing,
   data acquiring processing that acquires data at a timing defined by the time series generated in the random number generation processing,
   hashing processing that hashes the time series generated in the random number generation processing, and
   sending processing that sends the data acquired in the data acquiring processing and the time series that has been hashed, and
the data confirmation processing includes:
   receiving processing that receives the data sent in the sending processing and the hashed time series,
   verification random number generation processing that generates a verification time series that is identical to the time series generated in the random number generation processing, verification hashing processing that hashes the verification time series generated in the verification random number generation processing, and
   confirmation processing that confirms the received data by comparing the hashed time series with the hashed verification time series.

In the information processing method performed by an information processing device according to the present disclosure,
the hashing processing hashes the acquired data,
the sending processing sends the hashed data,
the verification hashing processing hashes received data, and
the confirmation processing confirms the received data by comparing the data hashed in the hashing processing with the data hashed in the verification hashing processing.

An information processing program according to the present disclosure enables execution of, for example:
random number generation processing that generates a time series which defines an acquiring timing;
data acquiring processing that acquires data at a timing defined by the time series generated in the random number generation processing;
hashing processing that hashes the time series generated in the random number generation processing; and
sending processing that sends the data acquired in the data acquiring processing and the time series that has been hashed.

The information processing program according to the present disclosure causes an information processing device to execute, for example:
receiving processing that receives data sent from a data collection device and hashed information obtained by hashing a time series that defines a data collection timing;
verification random number generation processing that generates a verification time series that is identical to the time series generated by the data collection device;
verification hashing processing that hashes the verification time series generated in the verification random number generation processing; and
confirmation processing that confirms the received data by comparing the received hashed information with the hashed verification time series.

### [Brief Description of Drawings]

[Fig. 1] Fig. 1 is a diagram illustrating the configuration of an information processing system according to an embodiment.
[Fig. 2] Fig. 2 is a flowchart illustrating data collection processing executed by a data collection device according to the embodiment.
[Fig. 3] Fig. 3 is a diagram illustrating the data collection processing executed by the data collection device according to the embodiment.
[Fig. 4] Fig. 4 is a flowchart illustrating learning/anomaly detection processing executed by a server according to the embodiment.
[Fig. 5] Fig. 5 is a table showing blockchain technology classifications.

### [Description of Embodiments]

Hereinafter, embodiments and the like of the present disclosure will be described with reference to the drawings. Note that the descriptions will be given in the following order.

### <1. First Embodiment>

### <2. First Modification>

### <3. Second Modification>

Note that the embodiment and the like described below are preferred specific examples of the present disclosure, and the content of the present disclosure is not limited to the embodiments.

### <1. First Embodiment>

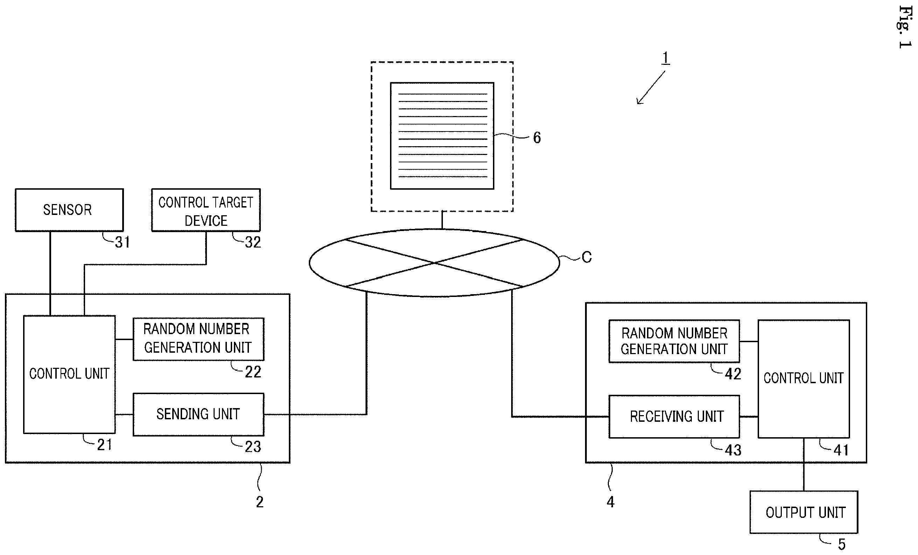

Fig. 1 is a diagram illustrating the configuration of an information processing system according to an embodiment. The information processing system of the present embodiment is configured including a data collection device 2, a sensor 31, a control target device 32, a server 4 (corresponding to an "information processing device that confirms data"), an output unit 5, and a management ledger 6. At present, technology called IoT (Internet of Things) is becoming widespread. The IoT, called the "Internet of Things", connects a wide variety of objects in peoples' lives to the Internet, which enables mutual control of those objects.

In IoT, it is necessary to provide sensors on objects to determine the states of the objects or the surroundings of the objects. Furthermore, in IoT, various types of control may be performed via the control target device 32. The present embodiment assumes that one method is to use the control target device 32 to control a given system and measure various types of information (data) about that system using the sensor 31. In other words, for a given system, data (input data) is input by the control target device 32, and data (output data) is measured by the sensor 31. IoT technology that uses such a sensor 31 and control target device 32 may be, for example, the cases described below.

### (1) Smart Agriculture

a. In large farms, pesticides and fertilizers may be sprayed using spraying devices, and a soil sensor may be used to measure the condition of the sprayed soil. A soil sensor measures environmental information such as EC (electrical conductivity), pH (acidity), ground temperature, and water content in the ground or water, for example. By measuring the environmental information using a soil sensor and appropriately managing the amount of pesticides and fertilizers sprayed by the spraying device, crop yields can be increased and the like.

### (2) Drones

a. Drones that use propellers to fly by remote control or autonomously are used in various fields. A drive unit (motor) that rotates the propellers is considered to be the control target device 32, and the sensor 31 mounted on the drone senses the operating conditions, flight conditions, and the like of the device and confirms the consistency with an operating program to ensure safe and stable flight.
b. In the smart agriculture described in (1), it is conceivable to use a drone to spray pesticides, monitor growth conditions, and the like. The consistency can be further improved by, for example, combining a flight course set for when the drone sprays the pesticide, an IMU (Inertial Measurement Unit), and a measurement result from the soil sensor measuring changes in the soil resulting from the pesticide.

### (3) Implementation in Autonomous Driving

a. At present, autonomous driving (self-driving) technologies for automobiles are being developed. In such autonomous driving, a large number of sensors are provided in an automobile to detect the situation around the automobile or the state of the automobile. Applying the present technique to the various types of sensors installed in an automobile makes it possible to check the consistency with control commands for autonomous driving.

The sensor 31 is connected to the data collection device 2 in order to send various types of data which have been collected to a communication network C such as the Internet. The sensor 31 and the data collection device 2 may be connected by a wire or wirelessly. In Fig. 1, the sensor 31 and the data collection device 2 are connected one-to-one, but the connection is not limited to such a form, and a plurality of sensors 31 may be connected to a single data collection device 2.

The control target device 32 is connected to the data collection device 2 by a wire or wirelessly. In the present embodiment, the information sent from the data collection device 2 to the control target device 32 serves as input data for the given system, and output data is obtained by measuring the various types of information of the system using the sensor 31.

The data collection device 2 is configured including a control unit 21, a random number generation unit 22, and a sending unit 23. The control unit 21 is connected to the sensor 31, the control target device 32, the random number generation unit 22, and the sending unit 23, and manages and controls those units. The random number generation unit 22 generates a random number that serves as a time series T. Note that the random number generation unit 22 (corresponding to a "random number generation unit") is capable of generating the same random number as a random number generation unit 42 provided on the server 4 side. As such, the random number generation unit 42 on the server 4 side is capable of reproducing and generating the time series T generated by the data collection device 2.

The sending unit 23 is capable of sending various types of information formed by the control unit 21 to the communication network C. In the present embodiment, the information is written into the management ledger 6, which is located on the communication network C. This management ledger 6 may be stored in a specific device, or may be stored in devices in a distributed form, as with blockchain.

By receiving the management ledger 6, the server 4 can obtain data measured by the sensor 31, perform learning processing using the data, and perform anomaly detection processing and the like based on the learning results. The server 4 is configured including a control unit 41, the random number generation unit 42, and a receiving unit 43. The receiving unit 43 is connected to the communication network C and can receive the management ledger from the communication network C. The random number generation unit 42 (corresponding to a "verification random number generation unit") is capable of generating the same random number as the random number generation unit 22 on the data collection device 2 side. In this manner, the random number generation units 22 and 42 according to the present embodiment do not output completely random values, and can therefore be called "pseudo-random number generation units" as well. The generated random number is the same time series T as from the random number generation unit 22, but will be called a verification time series T' to distinguish it from the time series T.

The control unit 41 of the server 4 executes the learning processing and the anomaly detection processing on the basis of the received management ledger 6. In the present embodiment, the control unit 41 corresponds to a verification hashing unit, a confirmation unit, and a learning unit. Although the learning processing and the anomaly detection processing (the learning and anomaly detection processing will be described later) are performed by a single server 4 in the present embodiment, the learning processing and the anomaly detection processing may be performed by different servers. The results of the learning processing and the anomaly detection processing can be output to the output unit 5 (e.g., a display unit, a printer, or the like) connected to the control unit 41.

The control of the control target device 32, the data collection processing of the sensor 31, the learning processing using the collected data, and the anomaly detection processing using the collected data are executed using the information processing system 1 described above with reference to Fig. 1. The present embodiment assumes that the data collection processing is executed in the data collection device 2, and the learning/anomaly detection processing are executed in the server 4.

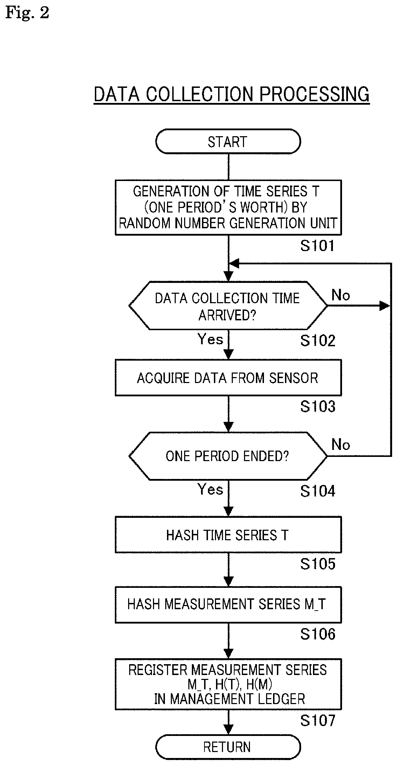

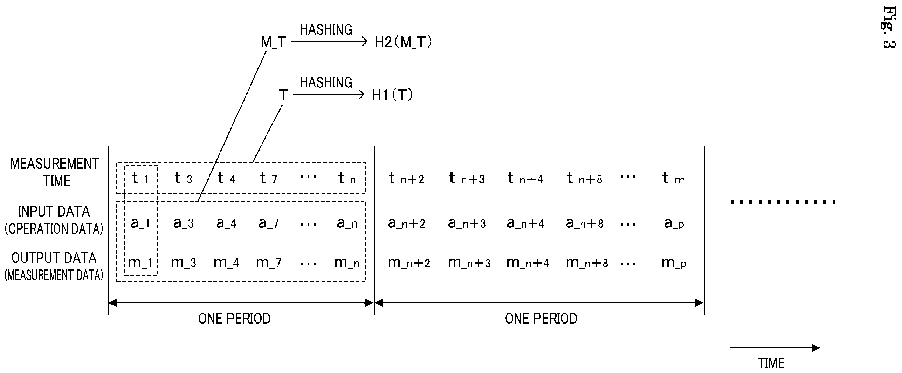

Fig. 2 is a flowchart illustrating the data collection processing executed by the data collection device 2 according to the embodiment. Fig. 3 is a diagram illustrating the data collection processing executed by the data collection device according to the embodiment.

In the data collection processing, first, one period's worth of the time series T is generated by the random number generation unit 22 (S101). Fig. 3 is a diagram illustrating the data collection processing, with the horizontal axis representing the passage of time. In Fig. 3, in, for example, the first period, a time series T including t_1, t_3, t_4, t_7, and so on up to t_n is generated by the random number generation unit 22. Among t_1, t_3, t_4, t_7, and so on up to t_n, the subscripts 1, 3, 4, 7, and so on up to n are numerical values indicating times, and the timings and time intervals thereof are random values.

Next, the control unit 21 monitors the arrival of a data collection time on the basis of the time series T (S102), and when the data collection time arrives (S102: Yes), the control unit 21 acquires values for controlling the control target device 32, i.e., the input data for a given system and the output data from the given system measured using the sensor 31 (S103). For example, in a heating device used in greenhouse cultivation on a farm, a temperature adjustment amount can be used as input data (operation data), and the value of a thermometer installed in the greenhouse can be used as the output data (measurement data). Note that it is acceptable to take only one of the input data and the output data as the measurement result. Alternatively, a plurality of instances of input data or output data may be present.

For example, when time t_1 arrives, the control unit 21 acquires input data (operation data) a_1, which is a control value of the control target device 32, and output data (measurement data) m_1 measured by the sensor 31. Next, if the data collection time has not been completed within one period (S104: No), the processing returns to S102 and waits for the arrival of the next data collection time. By repeatedly executing S102 to S104, in correspondence with the first period's worth of the time series T (t_1, t_3, t_4, t_7, and so on up to t_n), a measurement series M_T constituted by sets of the input data (the operation data) and the output data (the measurement data) ((a_1, m_1), (a_3, m_3), (a_4, m_4), (a_7, m_7), and so on up to (a_n, m_n)) are collected, as illustrated in Fig. 3.

When the data collection in one period is complete (S104: Yes), hashing of the time series T (S105) and hashing of the measurement series M_T (S106) are executed. Here, "hashing" refers to inputting the value of the time series T (or the measurement series M_T) into a predetermined function (a hash function) in order to obtain a hash value. Accordingly, by hashing the time series T (S105), a first hash value H1 (T) is obtained, and by hashing the measurement series M_T (S106), a second hash value H2 (M_T) is obtained.

Then, the measurement series M_T, the first hash value H1 (T), and the second hash value H2 (M_T) are sent to the communication network C and registered in the management ledger 6 (S107). This completes one period's worth of the data collection processing. When the one period's worth of the data collection processing is complete, the data collection processing for the next period begins. In the case of Fig. 3, for a time series T (t_n + 2, t_n + 3, t_n + 4, t_n + 8, and so on up to t_m), the data of the measurement series M_T ((a_n + 2, m_n + 2), (a_n + 3, m_n + 3), (a_n + 4, m_n + 4), (a_n + 8, m_n + 8), and so on up to (a_p, m_p)) is acquired and subjected to various types of processing such as hashing.

Note that the period used for the data collection processing can be determined as appropriate. The random number generation unit 22 may generate the same number of data collection times in each period. In this case, the time length of each period does not necessarily have to be constant. Alternatively, the time length of each period may be the same. In this case, the data collection times do not necessarily have to be the same number. Alternatively, the number of data collection times and the time length of each period may be randomized.

The usage of the various types of information registered in the management ledger 6, i.e., the measurement series M_T, the first hash value H1 (T), and the second hash value H2 (M_T), will be described next. In the present embodiment, the various types of information registered in the management ledger 6 are used by the server 4. In the server 4, by referring to the measurement series M_T, the results of measurement by the sensor 31 can be confirmed and used in various types of processing, control, or the like. Additionally, in the present embodiment, using the first hash value H1 (T) and the second hash value H2 (M_T) makes it possible to confirm that the measurement series M_T is proper data which has not been tampered with, destroyed, or the like. Additionally, performing learning using proper measurement series M_T makes it possible to detect anomalies based on the learning results.

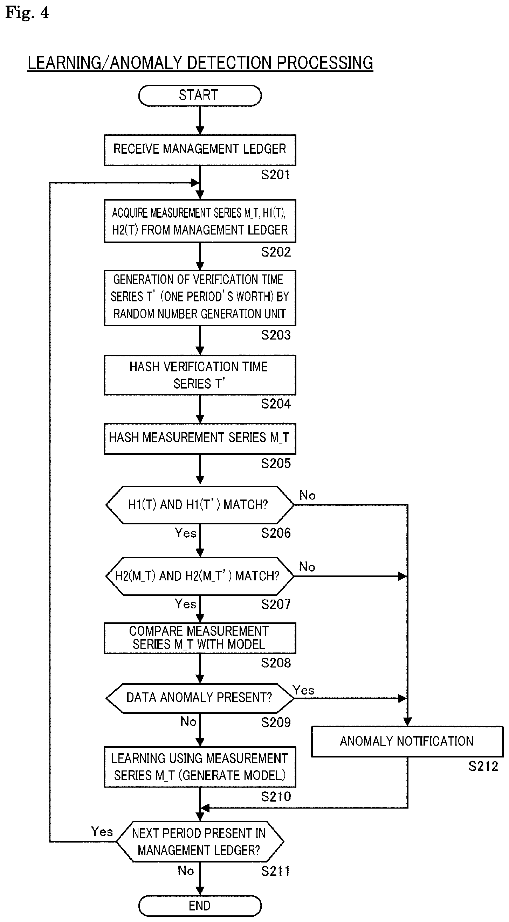

Fig. 4 is a flowchart illustrating learning/anomaly detection processing executed by the server 4 according to the embodiment. The executed processing described hereinafter is performed by the control unit 41 unless otherwise noted. The receiving unit 43 of the server 4 receives the management ledger 6 over the communication network C (S201). Then, one period's worth of the measurement series M_T, the first hash value H1 (T), and the second hash value H2 (M_T) are acquired from the received management ledger 6 (S202). On the other hand, the random number generation unit 42 in the server 4 generates the verification time series T' in the period subject to the processing (S203).

As mentioned above, the random number generation unit 42 of the server 4 is capable of outputting the same time series T as the random number generation unit 22 of the data collection device 2 for a given period of time. For example, the random number generation units 22 and 24 can generate the same series of random numbers, i.e., the time series T, by referring to the same table or using the same algorithm after starting operations. In the present embodiment, the output of the random number generation unit 22 on the data collection device 2 is called the "time series T" and the output of the random number generation unit 42 on the server 4 side is called the "verification time series T'", but the time series T and the verification time series T' for the same given period are the same. Accordingly, combining the received measurement series M_T and the generated verification time series T completes accurate measurement data.

By hashing the verification time series T' after the verification time series T' has been generated, a verification first hash value H1 (T') is obtained (S204). Furthermore, in the present embodiment, a measurement series M_T' acquired from the management ledger 6 is hashed to obtain a verification second hash value H2 (M_T') (S205). Here, the measurement series M_T" acquired from the management ledger 6 is given a dash "'" to distinguish that series from the measurement series M_T acquired at the time of measurement. Additionally, the hash function used to hash the verification time series T' and the measurement series M_T acquired from the management ledger 6 is the same as the hash function used to hash the time series T (S105) and to hash the measurement series M_T (S106) in the data collection processing.

Then, the data is confirmed by comparing the first hash value H1 (T) acquired (received) from the management ledger 6 with the verification first hash value H1 (T') (S206). If no tampering, data destruction, or the like has occurred in the communication network C or the like, the first hash value H1 (T) and the verification first hash value H1 (T') will match. On the other hand, if tampering, data destruction, or the like has occurred, the first hash value H1 (T) and the verification first hash value H1 (T') will be different, and it will be necessary to question the authenticity of the data itself of the measurement series M_T in the management ledger. In such a case, the data for the period being processed is not appropriate. When the first hash value H1 (T) and the verification first hash value H1 (T') match (S206: Yes), the sequence moves to the next instance of confirmation processing. On the other hand, when the first hash value H1 (T) and the verification first hash value H1 (T') do not match (S206: No), an anomaly notification (S212) is executed.

Various forms of anomaly notifications (S212) can be used, such as outputting an alert to the output unit 5, assigning a flag indicating an anomaly to the data of the relevant period that is determined to be anomalous, or the like. The present embodiment assumes that after the anomaly notification (S212), the processing returns to S202 to confirm the various types of data in the management ledger 6, but if an anomaly has been detected, the subsequent confirmation of the various types of data may be suspended.

Next, the data is confirmed by comparing the second hash value H2 (M_T) acquired (received) from the management ledger 6 with the verification second hash value H2 (M_T') (S207). As in the case of the first hash value H1 (T), if no tampering, data destruction, or the like has occurred in the communication network C or the like, the second hash value H2 (M_T) and the verification second hash value H2 (M_T') will match. On the other hand, if tampering, data destruction, or the like has occurred, the second hash value H2 (M_T) and the verification second hash value H2 (M_T') will be different, and it will be necessary to question the authenticity of the data itself of the measurement series M_T in the management ledger. When the second hash value H2 (M_T) and the verification second hash value H2 (M_T') match (S207: Yes), the sequence moves to the next instance of processing. On the other hand, when the second hash value H2 (M_T) and the verification second hash value H2 (M_T') do not match (S207: No), an anomaly notification (S212) is executed.

When both the first hash value H1 (T) and the second hash value H2 (M_T) match (S207: Yes), the measurement series M_T received from the management ledger 6 is compared with a model to perform the confirmation of data anomalies. Here, the model is information formed by the measurement series M_T determined to not have been subjected to tampering or data destruction, and for example, using the simultaneous distribution q(a, m) to N(a, m)/ΣN (a', m') of the measurement series M_T is conceivable. In this simultaneous distribution serving as a model, if the measurement series M_T received from the management ledger 6 exceeds a predetermined range within the distribution (e.g., 3σ), it is determined that there is a data anomaly (S209: Yes), and an anomaly notification is performed (S212).

On the other hand, when, as a result of comparing the measurement series M_T with the model, there is no data anomaly (S209: No), learning using the measurement series M_T received from the management ledger 6, i.e., generating a model using that measurement series M_T, is performed. For example, when the simultaneous distribution described above is used, a new model is generated by adding the measurement series M_T received this time to the model generated thus far.

If there is a next period in the management ledger after the execution of learning using the measurement series M_T (S211: Yes), the sequence returns to S202, and processing such as data confirmation and the like is executed for the next period. On the other hand, if there is no next period (S211: No), the learning/anomaly detection processing ends.

As described thus far, in the present embodiment, first data confirmation is performed using the first hash value H1 (T). According to such a configuration, the time series T in the sensor 31 and the control target device 32 are randomly generated by the random number generation unit 22, and thus an outside attacker cannot know which time data needs to be normalized. On the other hand, on the side of the server 4, which is an appropriate user, the random number generation unit 42 is shared, and it is therefore possible to confirm the time series T.

Additionally, in the present embodiment, the time series T is generated by each of the data collection device 2 and the server 4, and there is therefore no need to send the time series T from the data collection device 2. Therefore, since the data collection device 2 does not need to send all data related to the measurement, the communication volume can be reduced, the amount of data in the management ledger can be reduced, and the like, which makes it possible to reduce costs.

In addition, according to the present embodiment, it is possible to obtain and confirm data with a high degree of certainty using a simple configuration, in which the data collection device 2, which is the data sending side, includes the random number generation unit 22, and the server 4, which is the data receiving side, includes the random number generation unit 42. In addition, because the recording and management is performed using the management ledger 6, data can be easily verified at a later time.

Furthermore, according to the present embodiment, a second data confirmation is performed using the second hash value H2 (M_T), which makes it possible to double-check that the measurement series M_T received by the server 4 has not been tampered with or subjected to data destruction. Additionally, by performing learning of the measurement series M_T using the measurement series M_T determined to not have been tampered with or subjected to data destruction, whether or not there are any anomalies in the measurement series M_T can be determined using a highly-reliable model. In particular, when a set of input data and output data for a given system is used as the measurement series M_T, the measurement series M_T can be considered to be data having a set relationship, and the effectiveness of creating the model through learning, and determining anomalies using the model, will be high.

Although the learning processing and the anomaly detection processing are performed simultaneously in the server 4 in the present embodiment, the learning processing and the anomaly detection processing may be performed at different times. Alternatively, the processing may be performed using a different server 4.

It is also desirable to make the hashing processing performed by the random number generation units 22 and 42 and the control unit 21 and 41 in the present embodiment tamper-resistant. Tamper resistance is thought to achieve better confidentiality, not only through software, such as encryption using a cryptographic key, but also through hardware, such as encapsulating an IC in a special package.

In the embodiment, the server 4 may have the functions of the data collection device 2, and those functions may be performed by the same server, or the data collection device 2 may be a server (an information processing device).

According to at least one embodiment of the present disclosure, received data can be confirmed when sending data over a communication network. The effects described herein are merely examples and not limiting, and other effects may be provided as well. Furthermore, the content of the present disclosure is not to be interpreted as being limited by the effects described as examples here.

The information processing system 1 described in the present embodiment can also be used as the cases (modifications) described below.

### <2. First Modification>

For example, Ethereum, which issues the virtual currency Ether, provides a Turing-complete infrastructure. Anomaly detection may be outsourced to outside users (outside companies or outside individuals) using this type of smart contract (a computer protocol intended for the smooth verification, execution, enforcement, and negotiation of contracts, and one of the applications of blockchain and cryptocurrency).

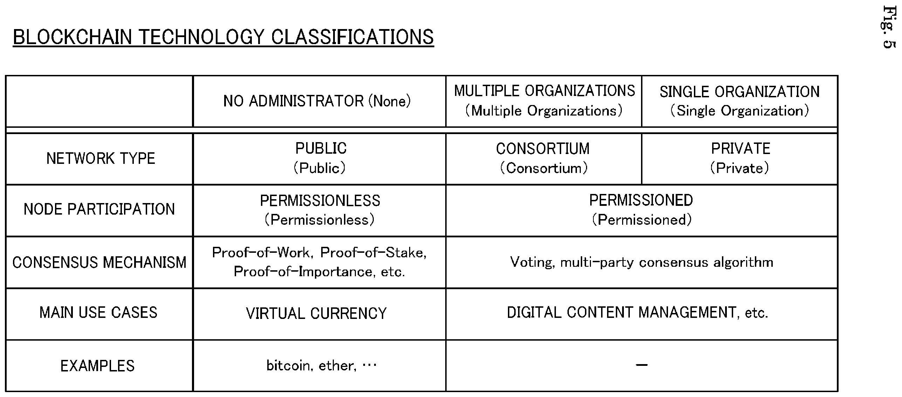

Blockchain technology, including Ethereum, will be described here. The term "blockchain" simply refers to a data structure (a structure of data strung together by hash functions) itself. (The term "blockchain" itself is a name that first came into use after the appearance of Bitcoin, and refers to a data structure that was originally called a "hash chain".) Recently, however, the use of the term has become more ambiguous due to the use thereof in the core technology of Bitcoin, and tends to include a distributed shared ledger or a method of creating such a ledger (consensus algorithms and the like). Fig. 5 is a table showing blockchain technology classifications. As shown in the table in Fig. 5, there are three types of methods for managing a distributed ledger (no administrator, multiple organizations, and single organization).

Virtual currency, which belongs to the "no administrator" classification, is one distributed application which is also an application of blockchain technology. If blockchain is a database-layer technology, then virtual currency can be said to be an application-layer technology. Examples include Bitcoin and Ether. "Ethereum" is the name of a platform for building distributed applications that execute smart contracts, and is the collective name for related open-source software projects. Ethereum is classified as a public blockchain. While Bitcoin provides what is known as a "currency ledger", Ethereum provides a "program ledger" (along with a currency ledger called "Ether").

Specifically, the use of Ether in the present disclosure can be considered to be a contract in which the registration to the management ledger 6 in the data collection is performed through Ether, and for anomaly detection, the processing aside from hashing and confirming hash values is performed by an outside user, with anomalies being reported upon being discovered. Outside users are paid for normal monitoring duties and when they find anomalies. In addition, the reward for finding anomalies is set higher than that for normal monitoring duties. When an anomaly is found, the Ether side may check whether the anomaly has been found correctly, and pay a reward for the anomaly only if the anomaly has been found correctly.

Although the first modification describes a form that uses Ether as one way of using smart contracts, other forms (platforms) can also be used as long as they use smart contracts. In addition, the partial outsourcing of processing to outside users described in the first modification is not limited to smart contracts, and the embodiment described with reference to Fig. 1 and the like can be applied as well.

### <3. Second Modification>

Although Fig. 1 illustrates the information processing system 1 as being configured between the data collection device 2 and the server 4, the likelihood of data anomalies may be reduced by a plurality data collection devices 2 confirming the data with each other, rather than using the server 4. For example, if each data collection device 2 is equipped with a light source and a photodetector, the data collection devices 2 can sense each other's light sources to improve the consistency of each other's data. Additionally, if a mutual local communication function is provided, the devices may exchange data with each other, or send the results of a challenge and response or the like as measurement data.

In this manner, if each data collection device 2 has a data sending function and a receiving function, they can exchange data with each other to improve consistency.

The present disclosure can also be realized by a device, a method, a program, a system, and the like. For example, a program that executes the functions described in the above-described embodiment is caused to be downloadable, and a device that does not have the functions described in the embodiment can perform control described in the embodiment in the device by downloading the program. The present disclosure can also be realized by a server that distributes such a program. In addition, the items described in the embodiment and modifications can be combined as appropriate.

The present disclosure may also be configured as follows.
(1) An information processing device including:
   a random number generation unit that generates a time series which defines an acquiring timing;
   a data acquiring unit that acquires data at a timing defined by the time series generated by the random number generation unit;
   a hashing unit that hashes the time series generated by the random number generation unit; and
   a sending unit that sends the data acquired by the data acquiring unit and the time series that has been hashed.
(2) An information processing device including:
   a receiving unit that receives data sent from a data collection device and hashed information obtained by hashing a time series that defines a data collection timing;
   a verification random number generation unit that generates a verification time series that is identical to as the time series generated by the data collection device;
   a verification hashing unit that hashes the verification time series generated by the verification random number generation unit; and
   a confirmation unit that confirms the received data by comparing the received hashed information with the hashed verification time series.
(3) The information processing device according to (1) or (2), wherein
   the data acquired by the data acquiring unit includes data measured by a sensor.
(4) The information processing device according to any one of (1) to (3), wherein the data acquired by the data acquiring unit includes data that controls a control target unit.
(5) The information processing device according to any one of (1) to (4), wherein
   the data acquired by the data acquiring unit includes data measured by a sensor and data that controls a control target unit, and
   the control target unit controls a system measured by the sensor.
(6) The information processing device according to any one of (1) to (5), wherein the sending unit sends the data obtained by the data acquiring unit and the time series that has been hashed to a management ledger.
(7) The information processing device according to any one of (6), wherein the management ledger is a blockchain.
(8) The information processing device according to any one of (2) to (7), including:
   a learning unit that creates a model using data confirmed by the confirmation unit.
(9) The information processing device according to (8), wherein
   the confirmation unit confirms the received data using the model created by the learning unit.
(10) The information processing device according to (1), wherein
   the data obtained by the data acquiring unit and the hashed time series are sent to another information processing device by the sending unit.
(11) An information processing method including:
   random number generation processing that generates a time series which defines an acquiring timing;
   data acquiring processing that acquires data at a timing defined by the time series generated in the random number generation processing;
   hashing processing that hashes the time series generated in the random number generation processing; and
   sending processing that sends the data acquired in the data acquiring processing and the time series that has been hashed.
(12) An information processing method performed by an information processing device includes:
   data collection processing, and data confirmation processing capable of communicating with the data collection processing, wherein
   the data collection processing includes: random number generation processing that generates a time series which defines an acquiring timing,
   data acquiring processing that acquires data at a timing defined by the time series generated in the random number generation processing,
   hashing processing that hashes the time series generated in the random number generation processing, and
   sending processing that sends the data acquired in the data acquiring processing and the time series that has been hashed, and
   the data confirmation processing includes:
      receiving processing that receives the data sent in the sending processing and the hashed time series,
      verification random number generation processing that generates a verification time series that is identical to the time series generated in the random number generation processing, verification hashing processing that hashes the verification time series generated in the verification random number generation processing, and
      confirmation processing that confirms the received data by comparing the hashed time series with the hashed verification time series.
(13) The information processing method according to (12), wherein
   the hashing processing hashes the acquired data,
   the sending processing sends the hashed data,
   the verification hashing processing hashes the received data, and
   the confirmation processing confirms the received data by comparing the data hashed in the hashing processing with the data hashed in the verification hashing processing.
(14) An information processing program enables execution of:
   random number generation processing that generates a time series which defines an acquiring timing;
   data acquiring processing that acquires data at a timing defined by the time series generated in the random number generation processing;
   hashing processing that hashes the time series generated in the random number generation processing; and
   sending processing that sends the data acquired in the data acquiring processing and the time series that has been hashed.
(15) The information processing program according to (14), causing an information processing device to execute:
   receiving processing that receives data sent from a data collection device and hashed information obtained by hashing a time series that defines a data collection timing;
   verification random number generation processing that generates a verification time series that is identical to the time series generated by the data collection device;
   verification hashing processing that hashes the verification time series generated in the verification random number generation processing; and
   confirmation processing that confirms the received data by comparing the received hashed information with the hashed verification time series.

### [Reference Signs List]

- 1: Information processing system
- 2: Data collection device
- 3: Subscript
- 4: Server
- 5: Output unit
- 6: Management ledger
- 7: Subscript
- 21: Control unit
- 22: Random number generation unit
- 23: Sending unit
- 24: Random number generation unit
- 31: Sensor
- 32: Control target device
- 41: Control unit
- 42: Random number generation unit
- 43: Receiving unit

## Claims

1. An information processing device comprising:
a random number generation unit that generates a time series which defines an acquiring timing;
a data acquiring unit that acquires data at a timing defined by the time series generated by the random number generation unit;
a hashing unit that hashes the time series generated by the random number generation unit; and
a sending unit that sends the data acquired by the data acquiring unit and the time series that has been hashed.

2. The information processing device according to claim 1, comprising:
a receiving unit that receives data sent from the data acquiring device and hashed information obtained by hashing a time series that defines a data collection timing;
a verification random number generation unit that generates a verification time series that is identical to the time series generated by the data collection device;
a verification hashing unit that hashes the verification time series generated by the verification random number generation unit; and
a confirmation unit that confirms the received data by comparing the received hashed information with the hashed verification time series.

3. The information processing device according to claim 1, wherein
the data acquired by the data acquiring unit includes data measured by a sensor.

4. The information processing device according to claim 1, wherein
the data acquired by the data acquiring unit includes data that controls a control target unit.

5. The information processing device according to claim 1, wherein
the data acquired by the data acquiring unit includes data measured by a sensor and data that controls a control target unit, and
the control target unit controls a system measured by the sensor.

6. The information processing device according to claim 1, wherein
the sending unit sends the data acquired by the data acquiring unit and the time series that has been hashed to a management ledger.

7. The information processing device according to claim 6, wherein the management ledger is a blockchain.

8. The information processing device according to claim 2, comprising:
a learning unit that creates a model using data confirmed by the confirmation unit.

9. The information processing device according to claim 8, wherein
the confirmation unit confirms the received data using the model created by the learning unit.

10. The information processing device according to claim 1, wherein
the data acquired by the data acquiring unit and the hashed time series are sent to another information processing device by the sending unit.

11. An information processing method performed by an information processing device, the method comprising:
random number generation processing that generates a time series which defines an acquiring timing;
data acquiring processing that acquires data at a timing defined by the time series generated in the random number generation processing;
hashing processing that hashes the time series generated in the random number generation processing; and
sending processing that sends the data acquired in the data acquiring processing and the time series that has been hashed.

12. An information processing method performed by an information processing device, the method comprising:
data collection processing, and data confirmation processing capable of communicating with the data collection processing, wherein
the data collection processing includes:
random number generation processing that generates a time series which defines an acquiring timing,
data acquiring processing that acquires data at a timing defined by the time series generated in the random number generation processing,
hashing processing that hashes the time series generated in the random number generation processing, and
sending processing that sends the data acquired in the data acquiring processing and the time series that has been hashed, and
the data confirmation processing includes:
receiving processing that receives the data sent in the sending processing and the hashed time series,
verification random number generation processing that generates a verification time series that is identical to the time series generated in the random number generation processing,
verification hashing processing that hashes the verification time series generated in the verification random number generation processing, and
confirmation processing that confirms the received data by comparing the hashed time series with the hashed verification time series.

13. The information processing method according to claim 12, wherein
the hashing processing hashes the acquired data,
the sending processing sends the hashed data,
the verification hashing processing hashes received data, and
the confirmation processing confirms the received data by comparing the data hashed in the hashing processing with the data hashed in the verification hashing processing.

14. An information processing program that enables execution of
random number generation processing that generates a time series which defines an acquiring timing;
data acquiring processing that acquires data at a timing defined by the time series generated in the random number generation processing;
hashing processing that hashes the time series generated in the random number generation processing; and
sending processing that sends the data acquired in the data acquiring processing and the time series that has been hashed.

15. The information processing program according to claim 14, causing an information processing device to execute:
receiving processing that receives data sent from a data collection device and hashed information obtained by hashing a time series that defines a data collection timing;
verification random number generation processing that generates a verification time series that is identical to the time series generated by the data collection device;
verification hashing processing that hashes the verification time series generated in the verification random number generation processing; and
confirmation processing that confirms the received data by comparing the received hashed information with the hashed verification time series.
